# EUROPÄISCHE PATENTANMELDUNG

(11) **EP 4 629 456 A1**
(43) Veröffentlichungstag der Anmeldung: **08.10.2025**
(21) Anmeldenummer: 25165219.4
(22) Anmeldetag: 21.03.2025
(51) Int. Cl.: H02G 1/02

(54) **ROBOTER UND VERFAHREN ZUR REPARATUR EINER LEITUNG**

(30) Priorität: 03.04.2024 DE 102024109288
(71) Anmelder: Westnetz GmbH, 44139 Dortmund (DE)
(72) Erfinder: Penczek, Torben, 45772 Marl (DE); Zieher, Laura, 44139 Dortmund (DE)
(74) Vertreter: Bals & Vogel Patentanwälte PartGmbB

(57) **Zusammenfassung**

Die Erfindung betrifft einen Roboter (100) zur Reparatur einer Leitung (1), insbesondere einer Mittel- oder Hochspannungsleitung, wobei der Roboter (100) eine Reparatureinheit (30) aufweist, welche dazu eingerichtet ist, eine an der Leitung (1) angreifende Drehbewegung durchzuführen, um eine Reparatur durchzuführen.

## Beschreibung

Die Erfindung betrifft einen Roboter mit den Merkmalen des unabhängigen Patentanspruchs betreffend einen Roboter, ein Verfahren mit den Merkmalen des unabhängigen Verfahrensanspruchs, ein Computerprogrammprodukt mit den Merkmalen des unabhängigen Patentanspruchs betreffend ein Computerprogrammprodukt, einen computerlesbaren Datenträger mit den Merkmalen des unabhängigen Patentanspruchs betreffend einen computerlesbaren Datenträger, eine Steuereinheit mit den Merkmalen des unabhängigen Patentanspruchs betreffend eine Steuereinheit sowie einen Schwarm mit den Merkmalen des unabhängigen Patentanspruchs betreffend einen Schwarm.

Bekannt sind Leitungen, insbesondere Mittel- oder Hochspannungsleitungen. Diese können eine Ummantelung aufweisen, beispielsweise umfassend ein leitfähiges Material wie z. B. Stahl. Die Ummantelung kann dabei spiralförmig bzw. verdrillt sein. Mit anderen Worten können die Leitungslitzen der Ummantelung (außenliegend) eine Spiralform aufweisen. Durch Witterung (z. B. Sturm), Einwirkung Dritter (z. B. Sachbeschädigung), Verschleiß, und/oder (thermische) Belastung, können Defekte an der Leitung, insbesondere der Ummantelung auftreten. Diese müssen für einen reibungsfreien Betrieb repariert werden.

Der Stand der Technik weist dabei Nachteile auf. So muss für eine Reparatur die Leitung stromlos und/oder spannungslos geschalten werden. Demnach kann dabei die Versorgung zumindest temporär eingeschränkt und/oder verhindert sein. Weiterhin kann eine Reparatur von Menschen, insbesondere manuell und/oder händisch, durchgeführt werden. Dies gefährdet den Menschen bzw. verringert die Sicherheit, insbesondere da die Reparatur in vergleichsweise großer Höhe, Witterung, und/oder unter dem Einfluss von Hochspannung (z. B. Aufladungen, ausbleibendes Abschalten, versehentliches Anschalten während der Reparatur) erfolgen können. Bei starkem Wind kann, oft aus Sicherheitsgründen bezüglich der Menschen, eine Reparatur nicht stattfinden, und es kann ein Verschieben auf einen späteren Zeitpunkt notwendig werden. Bei der Reparatur kann ein (oder mehrere) Hubwagen und/oder Helikopter verwendet werden. Dadurch können die Reparaturkosten, insbesondere aufgrund von speziellem Material, Ausrüstung und/oder Personal, erhöht sein. So kann es sein, dass Defekte (z. B. ein Ablösen der spiralförmigen Ummantelung), welche sich über einen längeren Leitungsabschnitt erstrecken, durch mehrere Menschen und/oder Hubwagen repariert werden müssen, welches insbesondere während der Reparatur (mehrfach) umpositioniert werden müssen Weiterhin kann eine Reparatur unzureichend sein, insbesondere aufgrund von limitierten menschlichen Fähigkeiten, Unkonzentriertheit (z. B. aufgrund widriger Witterung, insbesondere starkem Wind, Regen, Schnee, geringen Temperaturen und/oder geringer (Umgebungs-) Beleuchtung), und/oder (vergleichsweise) verringerter Weiterentwicklung der Fähigkeiten. Insbesondere kann ein Mensch nur bedingt von den Fehlern anderer Menschen bei der Reparatur eines Defekts lernen. Bei sehr vielen und/oder über eine größere Distanz erstreckten Defekten, kann ein mehrmaliges Reparieren bzw. Bewegen zu den Defekten notwendig sein, was insbesondere ein Umpositionieren (z. B. eines Hubwagens) erfordert. Dies kann die für die Reparatur notwendige Zeit verlängern.

Es ist daher eine Aufgabe der vorliegenden Erfindung, wenigstens einen der voranstehend beschriebenen Nachteile zumindest teilweise zu überwinden. Insbesondere ist es Aufgabe der Erfindung Materialaufwand, (notwendige) Personenanzahl, Kosten, Sicherheit, Zeitaufwand, Qualität der Reparatur, Zuverlässigkeit der Reparatur, und/oder Lernfortschritte zu optimieren. Weiterhin kann es eine Aufgabe sein, auch unter (vergleichsweise) schlechten Witterungsbedingungen, eine Reparatur (dennoch) zu ermöglichen.

Die voranstehende Aufgabe wird gelöst durch einen Roboter mit den Merkmalen des unabhängigen Patentanspruchs betreffend einen Roboter, ein Verfahren mit den Merkmalen des unabhängigen Verfahrensanspruchs, ein Computerprogrammprodukt mit den Merkmalen des unabhängigen Patentanspruchs betreffend ein Computerprogrammprodukt, einen computerlesbaren Datenträger mit den Merkmalen des unabhängigen Patentanspruchs betreffend einen computerlesbaren Datenträger, eine Steuereinheit mit den Merkmalen des unabhängigen Patentanspruchs betreffend eine Steuereinheit sowie einen Schwarm mit den Merkmalen des unabhängigen Patentanspruchs betreffend einen Schwarm. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Roboter beschrieben sind, selbstverständlich auch im Zusammenhang mit dem erfindungsgemäßen Verfahren und/oder im Zusammenhang mit dem erfindungsgemäßen Computerprogrammprodukt und/oder im Zusammenhang mit dem erfindungsgemäßen computerlesbaren Datenträger und/oder im Zusammenhang mit der erfindungsgemäßen Steuereinheit und/oder im Zusammenhang mit dem erfindungsgemäßen Schwarm und jeweils umgekehrt, so dass bezüglich der Offenbarung zu den einzelnen Erfindungsaspekten stets wechselseitig Bezug genommen wird bzw. werden kann. Insbesondere gelten Vorteile die im Rahmen des ersten, zweiten, dritten, vierten, fünften und/oder sechsten Aspekts beschrieben werden, auch jeweils für den ersten, zweiten, dritten, vierten, fünften und/oder sechsten Aspekt.

Die obenstehende Aufgabe wird gemäß einem ersten Aspekt gelöst durch einen Roboter zur Reparatur einer Leitung, insbesondere einer Mittel- oder Hochspannungsleitung, wobei der Roboter eine Reparatureinheit aufweist, welche dazu eingerichtet ist, eine an der Leitung angreifende Drehbewegung durchzuführen, um eine Reparatur durchzuführen. Vorzugsweise kann die Drehbewegung, insbesondere eine Richtung der Drehbewegung, in Abhängigkeit von der (spiralförmigen) Anordnung der (intakten) Leitungslitzen der Leitung erfolgen. Beispielsweise kann eine Drehbewegung, insbesondere beim Entlangfahren an der Leitung, im Uhrzeigersinn erfolgen, vorzugsweise wenn die Leitungslitzen (in dieser Richtung) ebenfalls im Uhrzeigersinn verlaufen. Beispielsweise kann eine Drehbewegung, insbesondere beim Entlangfahren an der Leitung, gegen den Uhrzeigersinn erfolgen, vorzugsweise wenn die Leitungslitzen (in dieser Richtung) ebenfalls gegen den Uhrzeigersinn verlaufen.

Dabei kann der Roboter das Verfahren gemäß dem zweiten Aspekt implementieren. Der Roboter kann dabei unbemannt sein und/oder drohnenartig ausgestaltet sein. Der Roboter kann fernsteuerbar sein, und insbesondere über eine Datenverbindung von einem Benutzer gesteuert werden. Dadurch kann ein, insbesondere hoch spezialisierter, Mensch sein Fachwissen und/oder Fachkönnen ortsunabhängig bereitstellen und/oder einsetzen. Der Roboter kann (zumindest teilweise autonom und/oder automatisiert die Reparatur durchführen, was insbesondere Kosten optimieren kann. Besonders bevorzugt kann es sein, dass der Roboter dazu eingerichtet ist, bestimmte, insbesondere grundlegende bzw. einfache, Reparaturen autonom durchzuführen, und insbesondere kompliziertere und/oder seltenere Defekte ferngesteuert und/oder in Kombination mit einem Menschen, insbesondere einem Benutzer der über eine Datenverbindung den Roboter Steuern und/oder Regeln kann, durchführt. Dadurch kann eine optimierte Kombination der menschlichen und roboterbedingten Fähigkeiten erzielt werden.

Im Rahmen der Erfindung kann (insbesondere zur Veranschaulichung) ein Rechthandsystem verwendet werden. Dabei kann sich eine Leitungsrichtung (oder Leitungslängsrichtung) entlang der Leitung erstrecken. Eine Horizontale kann dabei senkrecht zu der Leitungsrichtung verlaufen, insbesondere im Wesentlichen parallel zu der Erdoberfläche. Eine Vertikale kann dabei senkrecht zu der Leitungsrichtung und der Horizontalen verlaufen. Vereinfacht kann von einer im Wesentlichen parallel zur Erdoberfläche verlaufenden Leitung ausgegangen werden, welches sich längs der Leitungsrichtung erstreckt. Selbstverständlich kann es vorgesehen sein, dass diese Richtungen lediglich zur Beschreibung verwendet werden, insbesondere, weil eine (reale) Leitung "durchhängt".

Die Leitung kann dabei eine elektrische Leitung umfassen, und insbesondere eine Mittel- oder Hochspannung führen. Die Leitung kann sich entlang einer Leitungsrichtung erstrecken. Die Leitung kann im Wesentlichen einen runden Querschnitt aufweisen, insbesondere senkrecht zu der Leitungsrichtung. Dabei kann die Leitung, insbesondere eine (außenliegende) Ummantelung, zumindest teilweise (spiralförmig) verdrillt sein. Mit anderen Worten kann ein äußerer Mantel bzw. eine Mantelfläche zumindest teilweise verdrillt ausgestaltet sein, beispielsweise durch (verdrillte) Leitungslitzen. Die Leitung kann einen (Stahl-) Kern umfassen, welcher insbesondere für die Bereitstellung einer (mechanischen) Stabilität eingerichtet sein kann. Der Kern und/oder die Ummantelung kann eine Spannung und/oder einen Strom führen. Die Leitung, insbesondere die Ummantelung, kann eine und/oder mehrere Leitungslitzen aufweisen, welche beispielsweise einen Leiter (z. B. Stahl) aufweisen. Ein Defekt kann dabei eine beschädigte, angerissene, gerissene, gebrochene und/oder verbogene Leitungslitze umfassen. Eine gerissene Leitungslitze kann dabei zwei Leitungslitzenenden aufweisen, welche sich insbesondere zumindest teilweise, insbesondere entlang der Leitungsrichtung, abwickeln (z. B. aufgrund Ihrer mechanischen Spannung bzw. Verdrillung). Bevorzugt kann der Roboter dazu eingerichtet sein, zumindest eine Leitungslitze, insbesondere zwei (entsprechende) Leitungslitzenenden, zu reparieren. Die Leitungslitzenenden können dabei, insbesondere bei einem Defekt, in die Vertikale und/oder Horizontale abstehen und/oder verbogen sein.

Die Reparatureinheit kann dazu eingerichtet sein, einen Defekt der Leitung zu reparieren. Dabei können insbesondere (defekte) Leitungslitzenenden repariert werden. Hierfür kann der Roboter, insbesondere die Reparatureinheit, eine Drehbewegung durchführen. Die Drehbewegung kann senkrecht zu der Leitung(srichtung) und/oder um die Leitung(srichtung) erfolgen. Dabei kann die Drehbewegung, insbesondere eine durch die Drehbewegung erzeugte Kraft, an der Leitung angreifen (z. B. an der Oberfläche bzw. Ummantelung), beispielsweise an einer oder mehreren Leitungslitzen, insbesondere radial und/oder nach innen gerichtet (z. B. in Richtung eines Mittelpunkts des runden Querschnitts der Leitung. Dadurch kann eine Leitungslitze, insbesondere eine und/oder zwei Leitungslitzenenden, (erneut bzw. wieder) an der Leitung angeordnet werden, beispielsweise nachdem diese vorher verbogen und/oder abstehend war(en). Es kann alternativ oder zusätzlich vorgesehen sein, dass durch die Drehbewegung, insbesondere entlang einer defekten und/oder intakten Leitungslitze, eine (führende) Kraft (insbesondere in Richtung der Vertikalen, Horizontalen und/oder des Umfangs der Leitung) an einer (defekten) Leitungslitze bzw. einem (oder zwei) Leitungslitzenende(n) beaufschlagt wird, wodurch diese vorteilhafterweise an oder in ihrer ursprünglichen Position angeordnet und/oder angedrückt wird. Besonders bevorzugt kann die Drehbewegung ein Entlangbewegen entlang der Leitung, insbesondere in Leitungsrichtung, umfassen, und/oder mit einem (derartigen) Entlangbewegen kombiniert werden. Dadurch kann eine abstehende und/oder abgezogene Leitungslitze, insbesondere ein (oder zwei) Leitungslitzenenden, insbesondere schrittweise bzw. beim Entlangbewegen, wieder an der Leitung, z. B. am Kern der Leitung, angeordnet werden. Dadurch kann (insgesamt) ein Reparieren bzw. eine Reparatur der Leitung erfolgen. Durch die Drehbewegung und/oder das Entlangbewegen, kann eine Reparatur erfolgen, vorteilhafterweise mit hoher Qualität, Zuverlässigkeit, und/oder unter (vergleichsweise) widrigen Wetterbedingungen, z. B. starkem Wind, Regen, Schnee, geringen Temperaturen und/oder geringer (Umgebungs-) Beleuchtung.

Im Rahmen der Erfindung kann es von Vorteil sein, dass der Roboter eine Energieversorgungseinheit aufweist, welche den Roboter mit elektrischer Energie versorgt, wobei insbesondere die Energieversorgungseinheit dazu eingerichtet ist, eine induktive Kopplung und/oder elektrische Verbindung zu der Leitung bereitzustellen.

Dabei kann die Energieversorgungseinheit eine Batterie und/oder einen Akkumulator aufweisen. Vorzugsweise kann die Energieversorgungseinheit über die Leitung mit Strom und/oder Spannung versorgt werden. Dies kann das Gewicht des Roboters verringern. Zudem kann dadurch vergleichsweise eine größere Spannung, ein größerer Strom und/oder eine größere Leistung durch den Roboter bereitgestellt und/oder eingesetzt werden. Der Roboter bzw. die Energieversorgungseinheit kann dadurch geladen werden, was vorteilhafterweise die mögliche Einsatzzeit verlängert, insbesondere da keine Rückkehr zum Laden notwendig sein kann. Vorzugsweise kann die Energieversorgungseinheit über die Leitung kontaktlos bzw. ohne galvanische Verbindung elektrische Energie abgreifen. Dies kann eine besonders hohe Sicherheit für den Roboter und/oder die Leitung aufweisen. Dabei kann eine induktive Kopplung (nicht-physisch) bzw. rein induktiv erfolgen. Alternativ oder zusätzlich kann eine elektrische Verbindung physisch bzw. galvanisch erfolgen, beispielsweise über eine ein- oder zweipolig Klemme der Energieversorgungseinheit. Dies kann besonders hohe Spannungen und/oder Ströme bereitstellen, beispielsweise für ein Fügen. Die Energieversorgungseinheit kann einen Transformator aufweisen um hohe Spannungen / Ströme zu transformieren auf eine durch den Roboter nutzbare Spannung / Strom. Die Energieversorgungseinheit kann einen Wechselrichter aufweisen zum, Laden / Entladen der Energieversorgungseinheit, Heizen, und/oder für zumindest eine der übrigen (unten beschriebenen) Komponenten.

Im Rahmen der Erfindung ist es denkbar, dass der Roboter dazu eingerichtet ist, eine Reparatur einer spannungsführenden Leitung, insbesondere einer spannungsführenden Mittel- oder Hochspannungsleitung, durchzuführen.

Es kann bevorzugter vorgesehen sein, dass die Leitung während der Reparatur nicht abgeschalten wird bzw. werden muss. Während der Reparatur kann die Leitung also weiterhin Spannung und/oder Strom führen. Dazu kann der Roboter dazu eingerichtet sein, auch hohe Spannungen und/oder Ströme mechanisch und/oder elektrisch auszuhalten. Dafür kann der Roboter ein Gehäuse aufweisen, welches elektrisch und/oder mechanisch (zumindest teilweise) isoliert ist. Eine Reparatur von spannungsführenden Leitungen kann dabei die Kosten, den Zeitaufwand, und/oder eine Ausfallzeit optimieren. Es kann weiterhin vorteilhafterweise eine Spannung und/oder ein Strom für den Roboter bereitgestellt werden (siehe oben).

Es kann im Rahmen der Erfindung vorgesehen sein, dass die Reparatureinheit eine erste Matrize und/oder zweite Matrize aufweist, welche dazu eingerichtet ist:
- eine Leitung zu umgreifen,
- eine an der Leitung angreifende Drehbewegung durchzuführen, wobei sich vorzugsweise die erste Matrize und/oder zweite Matrize relativ zu der Leitung dreht,
- den Roboter an der Leitung, insbesondere reversibel lösbar, zu befestigen,
- den Roboter entlang der Leitung zu bewegen und/oder zu führen,
   und/oder
- von der Leitung abstehende Leitungslitzen, insbesondere Leitungslitzenenden, vorzugsweise entlang ihrer ursprünglichen spiralförmigen Anordnung, an der Leitung durch die an der Leitung angreifende Drehbewegung zu positionieren, um eine Reparatur durchzuführen.

Die erste und/oder zweite Matrize kann dabei, insbesondere bezogen auf die Leitung bzw. Leitungsrichtung, am vorderen und/oder hinteren Ende, insbesondere an der Unterseite, des Roboters angeordnet sein. Die erste und/oder zweite Matrize können dazu eingerichtet sein, den Roboter an der Leitung, insbesondere reversibel lösbar, zu befestigen. Dadurch kann der Roboter auch bei widriger Witterung eingesetzt werden. Die erste und/oder zweite Matrize können dazu eingerichtet sein, die Leitung zu umgreifen. Dazu können die erste und/oder zweite Matrize zumindest abschnittsweise U-förmig ausgestaltet sein, um die Leitung aufzunehmen. Die erste und/oder zweite Matrize können weiterhin einen, insbesondere reversibel lösbaren Verschlussmechanismus aufweisen, um vorteilhafterweise ein Befestigen an der Leitung zu ermöglichen, beispielsweise indem die U-Form durch den Verschlussmechanismus verschlossen wird, nachdem die Leitung darin aufgenommen wurde. Die erste und/oder zweite Matrize können dazu eingerichtet sein, trotz des Umgreifens bzw. Befestigens an der Leitung, ein Entlangbewegen an der Leitung und/oder eine Drehbewegung um die Leitung des Roboters, insbesondere der ersten und/oder zweiten Matrize, (dennoch) zu ermöglichen. Dies kann eine sichere Anordnung an der Leitung ermöglichen, und vorteilhafterweise gleichzeitig eine Beweglichkeit des Roboters gewährleisten, um die Reparatur durchzuführen. Die erste und/oder zweite Matrize können dazu eingerichtet sein, die Reparatur, insbesondere eine Drehbewegung, ein Entlangfahren, ein Andrücken (der Leitungslitze bzw. den Leitungslitzenenden) und/oder ein Positionieren (der Leitungslitze bzw. den Leitungslitzenenden) durchzuführen. Die erste und/oder zweite Matrize können dazu eingerichtet sein, sich relativ zu dem Roboter und/oder der Leitung zu bewegen, insbesondere zu drehen. Die erste und/oder zweite Matrize können dafür (jeweils) eine erste und/oder zweite Antriebseinheit aufweisen, welche für eine Drehbewegung und/oder ein Entlangbewegen an der Leitung eingerichtet sein kann. Dabei können die erste und/oder zweite Matrize erste und/oder zweite Zahnräder, Räder, Walzen, Formen und/oder Rollen aufweisen (beispielhaft wird im Folgeneden von Zahnrädern ausgegangen), welche insbesondere von der ersten und/oder zweiten Antriebseinheit angetrieben werden, und welche durch Drehung eine Drehbewegung des Roboters, der ersten und/oder zweiten Matrize um die Leitung erwirken, wobei insbesondere die Zahnräder zusätzlich oder separat ein Entlangbewegen des Roboters, der ersten und/oder zweiten Matrize entlang der Leitung (z. B. in Leitungsrichtung) erwirken, z. B. durch Führung entlang intakter oder defekter Leitungslitzen. Die ersten und/oder zweiten Zahnräder können dabei, insbesondere wenn der Roboter an der Leitung angeordnet ist, entlang der Leitungsrichtung, der (spiralförmigen) Leitungslitzen und/oder senkrecht zur Leitungsrichtung angeordnet sein. Es kann vorgesehen sein, dass die ersten und/oder zweiten Zahnräder relativ bzw. senkrecht zur Leitungsrichtung drehbar sind, um insbesondere in Abhängigkeit von Ihrer Stellung ein Entlangbewegen, eine Drehbewegung oder eine Mischung aus Entlangbewegen und Drehbewegung zu erwirken. Alternativ oder zusätzlich können die erste und/oder zweite Matrize, insbesondere innenliegend in Richtung Leitung, eine Formanpassung (z. B. Rillen) aufweisen, welche insbesondere an die Steigung und/oder die Form der Leitung, insbesondere der (intakten) Leitungslitzen, angepasst ist. Dadurch kann eine Drehbewegung und/oder ein Entlangbewegen (passiv) ermöglicht werden, insbesondere durch eine Führung der ersten und/oder zweiten Matrize an der Leitung, vorzugsweise an zumindest einer (intakten) Leitungslitze. Die erste und/oder zweite Matrize können dabei mehrteilig, beispielsweise zwei- oder vierteilig ausgestaltet sein. Dadurch kann eine Anpassung an unterschiedliche Leitungsdurchmesser ermöglicht werden. Zudem kann so ein einfaches Anordnen und/oder Lösen von der Leitung ermöglicht werden und/oder ein optimiertes Anpassen. Demnach kann es vorgesehen sein, dass unterschiedliche Matrizenteile beispielsweise voneinander beabstandet sind und/oder einstellbar aneinander reversibel lösbar befestigt sind, beispielsweise über einen Linearantrieb zwischen (jeweils) benachbarten Matrizenteilen.

Es kann vorgesehen sein, dass ein Roboter eine erste und eine zweite Matrize aufweist, welche insbesondere relativ zu dem Roboter und/oder relativ zueinander bewegbar und/oder drehbar ausgestaltet sind. Dabei kann die erste und/oder zweite Matrize dazu eingerichtet sein, insbesondere um die Leitung in Uhrzeigerrichtung und/oder entgegen der Uhrzeigerrichtung eine Drehbewegung durchzuführen. Vorzugsweise können die erste und zweite Matrize eines Roboters sich vorzugsweise, insbesondere bei einem Entlangbewegen, beispielsweise bei einem gegenseitigen Annähern, dazu eingerichtet sein, eine gegenläufige Drehbewegung durchzuführen, so dass vorteilhafterweise die erste und zweite Matrize jeweils eine Drehbewegung entlang der spiralförmigen Anordnung der Leitungslitze durchführen.

Besonders bevorzugt kann es sein, wenn die erste und/oder zweite Matrize dazu eingerichtet sind, von der Leitung abstehende Leitungslitzen, insbesondere Leitungslitzenenden, vorzugsweise entlang ihrer ursprünglichen spiralförmigen Anordnung, an der Leitung durch die an der Leitung angreifende Drehbewegung zu positionieren, um eine Reparatur durchzuführen. Durch die Drehbewegung um die Leitung und/oder ein Entlangbewegen an der Leitung kann demnach eine abstehende und/oder verbogene Leitungslitze, bzw. ein erstes und/oder zweites Leitungslitzenende, (wieder) an der Leitung, z. B. am Kern der Leitung, positioniert werden, insbesondere zwischen intakten Leitungslitzen. Mit anderen Worten kann eine Leitungslitze bei Defekt an einer Stelle beispielsweise vollständig durchtrennt worden sein. Der Defekt kann zwei entsprechende bzw. resultierende Leitungslitzenenden aufweisen, insbesondere ein erstes und ein zweites Leitungslitzenende. Diese können sich, beispielsweise aufgrund von (mechanischer) Spannung, Temperaturänderungen und/oder Kräften, von der Leitung zumindest abschnittsweise ablösen und/oder verbogen sein. Anfänglich bzw. im unversehrten Zustand können die Leitungslitzen vorzugsweise spiralförmig, insbesondere außenliegend, an der Leitung, z. B. auf dessen Kern, angeordnet sein. Die erste und/oder zweite Matrize können dazu eingerichtet sein, die Leitungslitze, insbesondere die (ersten und/oder zweiten) Leitungslitzenenden, wieder an ihrer ursprünglichen Position anzuordnen und/oder zumindest temporär zu fixieren, beispielsweise durch eine an der Leitung angreifende Drehbewegung, durch welche beispielsweise ein form- und/oder kraftschlüssiges Fixieren zwischen benachbarten und/oder intakten Leitungslitzen erfolgt. Vorzugsweise erfolgt eine (kombinierte) Drehbewegung um die Leitung und/oder ein Entlangfahren entlang der Leitung so lange, bis die Leitungslitzenenden wieder an ihrer ursprünglichen Position befinden und/oder in unmittelbarer Nähe zueinander. Anschließend können die zwei Leitungslitzenenden, durch ein Fügen bzw. eine Fügeeinheit verbunden und/oder repariert werden (siehe unten).

Es kann vorgesehen sein, dass ein Roboter eine erste und eine zweite Matrize aufweist, welche insbesondere relativ zu dem Roboter und/oder relativ zueinander bewegbar ausgestaltet sind, wobei vorzugsweise die jeweilige Drehbewegung gegenläufig ist. Dadurch kann ein (einziger) Roboter einen Defekt reparieren, beispielsweise, wenn die (abstehenden) Leitungslitzenenden weniger weit voneinander (entlang der Leitungsrichtung) entfernt sind, als der maximal einstellbare Abstand zwischen der ersten und zweiten Matrize, z. B. 17cm. Dabei können die erste und zweite Matrize jeweils beginnend in maximaler Beabstandung zueinander, kontinuierlich aufeinander zu bewegt werden, beispielsweise durch (jeweilige) Drehbewegung und/oder Entlangbewegen entlang der Leitung, insbesondere bis sich die erste und zweite Matrize (fast) berühren. Anschließend kann ein Fügen und/oder Sintern erfolgen, um die Leitungslitzenenden zu reparieren.

Es kann vorgesehen sein, dass ein (erster und/oder zweiter) Roboter (jeweils und/oder zumindest) eine erste und/oder (zumindest) eine zweite Matrize aufweist, welche insbesondere relativ zu dem Roboter und/oder relativ zueinander bewegbar ausgestaltet sind. Es kann auch vorgesehen sein, dass ein (erster) Roboter nur eine (erste) Matrize aufweist, welche insbesondere relativ zu dem Roboter eine Drehbewegung durchführen kann. Dadurch kann Gewicht eingespart werden. Es kann vorgesehen sein, dass ein (zweiter) Roboter eine (zweite) Matrize aufweist. Der erste und zweite Roboter können einen Schwarm bilden. Vorzugsweise können der erste und zweite Roboter im Zusammenspiel bzw. durch Zusammenwirken einen Defekt reparieren, beispielsweise wenn die (abstehenden) Leitungslitzenenden vergleichsweise weit voneinander (entlang der Leitungsrichtung) entfernt sind, beispielsweise weiter als die (maximalen) Abmessungen eines Roboters, z. B. 30 Meter. Dabei können der erste und zweite Roboter bzw. die erste und zweite Matrize jeweils beginnend in maximaler Beabstandung zueinander, kontinuierlich aufeinander zu bewegt werden, beispielsweise durch (jeweilige) Drehbewegung und/oder Entlangbewegen entlang der Leitung, insbesondere bis sich der erste und zweite Roboter bzw. die erste und zweite Matrize (fast) berühren. Dabei kann die Drehbewegung des ersten und zweiten Roboters, insbesondere der ersten und zweiten Matrize, gegenläufig sein, also insbesondere eine Matrize sich gegen den Uhrzeigersinn drehen und die andere mit dem Uhrzeigersinn, wodurch vorzugsweise beide Matrizen der (ursprünglichen) spiralförmigen Ausgestaltung der Leitungslitzen folgen bzw. an diesen geführt werden. Anschließend kann ein Fügen und/oder Sintern erfolgen, um die Leitungslitzenenden zu reparieren. Dadurch kann ein Schwarm bzw. ein erster und zweiter Roboter zusammenwirken, um eine Reparatur durchzuführen. Hierfür kann ein erster und/oder zweiter Roboter (jeweils) zumindest eine Matrize aufweisen. Es kann jedoch auch vorgesehen sein, dass der erste und/oder zweite Roboter (jeweils) eine erste und zweite Matrize aufweist. Ein Zusammenwirken kann (in jedem Fall) ermöglicht werden.

Es ist ferner denkbar, dass der Roboter eine, insbesondere reversibel an dem Roboter befestigbare, Flugeinheit aufweist, welche dazu eingerichtet ist, den Roboter, insbesondere selbstständig und/oder über die Luft, zu einer zu reparierenden Leitung zu bewegen oder von dieser zu entfernen. Demnach kann der Roboter und/oder die Flugeinheit als oder wie eine (Flug-) Drone ausgestaltet sein.

Dabei kann die Flugeinheit, kabellos und/oder ohne Leitungen, Kabel, Schnüre, Seile und/oder vergleichbare Verbindungselemente ausgestaltet sein bzw. ein Bewegen des Roboters ermöglichen, insbesondere um diesen an die Leitung zu bewegen und/oder von dieser zu entfernen. Demnach kann es vorgesehen sein, dass kein Mensch vor Ort sein muss, um eine Reparatur durchzuführen, insbesondere nicht in der (unmittelbaren) Nähe zu der Leitung. Dies kann eine Reparatur im Betrieb der Leitung (also unter Spannung / Strom) ermöglichen. Die Sicherheit kann dadurch erhöht werden. Durch die Flugeinheit kann es vorgesehen sein, dass keine separate Transportvorrichtung notwendig ist, beispielsweise eine Hebebühne oder dergleichen. Die Flugeinheit kann in dem Roboter (fest) integriert sein. Dadurch kann eine kompakte und/oder robuste Bauweise ermöglicht werden. Alternativ kann es vorgesehen sein, dass die Flugeinheit reversibel lösbar an dem Roboter befestigt werden kann. Demnach kann eine Flugeinheit einen Roboter zu der Leitung transportieren. Dieser kann dort abgesetzt werden und eine Reparatur beginnen oder durchführen. Die Flugeinheit kann (zeitgleich) einen weiteren Roboter zu der Leitung fliegen oder von dieser entfernen. Dadurch können die Roboter leichter ausgestaltet sein, insbesondere während einer Reparatur an der Leitung. Weiterhin kann eine Flugeinheit von der Leitung entfernt werden, wenn beispielsweise starker Wind aufkommt, während der Roboter an der Leitung verbleibt, um eine Reparatur durchzuführen. Es kann demnach vorgesehen sein, dass ein Roboter so lange an der Leitung angeordnet ist, bis alle (erreichbaren) Defekte repariert sind. Es kann vorgesehen sein, dass die Flugeinheit eine (eigene) Erfassungsvorrichtung aufweist, welches insbesondere (zusätzliche) Daten zu den von der Erfassungseinheit gelieferten bzw. erfassten Daten liefert. Dabei kann die Erfassungsvorrichtung wie die Erfassungseinheit ausgebildet sein (siehe unten). Demnach kann die Flugeinheit sich von dem Roboter abkoppeln und anschließend über die Erfassungsvorrichtung weitere Daten, insbesondere Bildmaterial, liefern, welches vorzugsweise aus der Perspektive des Roboters nicht oder nur unzureichend erfasst werden kann. Es kann vorgesehen sein, dass ein Roboter zwei oder mehr, insbesondere gleichartige Flugeinheiten aufweist, welche vorzugsweise unabhängig voneinander angesteuert werden können. Alternativ oder zusätzlich kann eine Flugeinheit ein, zwei, drei, vier oder mehr Rotoren aufweisen, welche vorzugsweise unabhängig voneinander angesteuert werden können.

Es kann vorgesehen sein, dass die Energieversorgungseinheit, der Transformator, der Wechselrichter, die Befestigungseinheit, die Flugeinheit, die Reparatureinheit, die erste und/oder zweite Matrize, die Schutzmitteleinheit, die Fügeeinheit, die Sintereinheit, die Steuereinheit und/oder die Kommunikationseinheit austauschbar, (reversibel) lösbar und/oder erweiterbar ausgestaltet sind. Demnach kann eine oder mehrere der (obigen) Komponenten ausgewechselt werden, beispielsweise bei Defekt und/oder in Abhängigkeit von einer geplanten Reparatur. So kann beispielsweise bei Schäden an einem Kern der Leitung eine spezifische Reparatureinheit notwendig sein, welche entsprechend im Vorfeld verbaut werden kann. Vorzugsweise weist ein Roboter, insbesondere mit oder ohne Flugeinheit, im Wesentlichen ein Gewicht von etwa 25 kg auf.

Auch ist es denkbar, dass der Roboter eine Befestigungseinheit zum reversiblen Befestigen des Roboters an einer Leitung aufweist.

Dabei kann die Befestigungseinheit alternativ oder zusätzlich zum (reversibel) lösbaren Befestigen des Roboters an der Leitung eingerichtet sein. Somit kann beispielsweise eine zusätzliche Sicherung bereitgestellt werden, insbesondere, wenn die erste und/oder zweite Matrize gerade weniger sicher bzw. stark greifen. Die Befestigungseinheit kann beispielsweise einen einstellbaren Karabiner und/oder ein Stahlseil umfassen, welches den Roboter, vorzugsweise an der Hinterseite (bezogen auf die Leitungsrichtung, bzw. Bewegungsrichtung beim Entlangbewegen an der Leitung) an der Leitung sichert.

Im Rahmen der Erfindung ist es optional möglich, dass der Roboter eine Schutzmitteleinheit aufweist, die dazu eingerichtet ist ein Schutzmittel, insbesondere ein Fett, an der Leitung anzuordnen.

Dabei kann die Schutzmitteleinheit dazu eingerichtet sein ein Schutzmittel an, auf und/oder in der Leitung, insbesondere zwischen Leitungslitzen, anzubringen, aufzutragen und/oder aufzusprühen. Dadurch kann der Schutz und/oder die Witterungsbeständigkeit der Leitung und/oder der Leitungslitzen verbessert werden.

Es kann weiterhin vorgesehen sein, dass der Roboter eine Reinigungseinheit aufweist. Diese kann von der Schutzmitteleinheit umfasst sein oder separat ausgebildet sein. Dabei kann die Reinigungseinheit dazu eingerichtet sein, die Leitung, insbesondere die Leitungslitzen zu reinigen, insbesondere bevor ein Reparieren erfolgt und/oder beim Bewegen. Dadurch kann vorteilhafterweise eine Oxidschicht und/oder Schmutz von den Leitungen und/oder Leitungslitzen entfernt werden, wodurch insbesondere ein Fügen und/oder Sintern erleichtert und/oder verbessert werden kann. Zudem kann dadurch eine verbesserte elektrische Leitfähigkeit der (reparierten) Leitung ermöglicht werden.

Ferner kann es im Rahmen der Erfindung vorgesehen sein, dass der Roboter eine Fügeeinheit zum Reparieren eines Defekts der Leitung aufweist, insbesondere zum Fügen einer Leitungslitze der Leitung, vorzugsweise von (zwei, insbesondere einem ersten und zweiten) Leitungslitzenenden.

Dabei kann die Fügeeinheit eine Lötvorrichtung und/oder eine Schweißvorrichtung aufweisen, welches dazu eingerichtet ist ein Fügen, insbesondere ein Löten und/oder Schweißen, zu ermöglichen, um eine Reparatur durchzuführen. Dabei können beispielsweise zwei, insbesondere vorher (wieder) an der Leitung angeordnete, Leitungslitzenenden wieder miteinander verbunden werden. Das Reparieren kann dabei ein kraftschlüssiges und/oder formschlüssiges Anordnen einer Leitungslitze, bzw. von Leitungslitzenenden, zwischen benachbarten Leitungslitzen aufweisen. Dadurch können die vorhandenen geometrischen (spiralförmigen) Ausgestaltungen genutzt werden. Das Reparieren kann dabei, insbesondere durch die Fügeeinheit durchgeführtes, materialschlüssiges Verbinden einer Leitungslitze, bzw. von Leitungslitzenenden, aufweisen, was vorteilhafterweise eine besonders robuste Verbindung bereitstellt, wodurch insbesondere ein erneuter Defekt an dieser Stelle zuverlässig unterbunden werden kann. Dadurch kann die Qualität der Reparatur verbessert werden.

In Bezug auf die vorliegende Erfindung ist es vorstellbar, dass der Roboter eine Sintereinheit zum Reparieren, insbesondere durch Sintern, eines Defekts der Leitung aufweist, insbesondere zum Erzeugen eines Leitungsmaterials.

Es kann dabei vorgesehen sein, dass die Sintereinheit dazu eingerichtet ist, ein Leitungsmaterial herzustellen, beispielsweise durch Sintern eines (leitfähigen) Materials, beispielsweise Kupfer, Aluminium, Eisen und/oder Stahl. Dies kann vorteilhaft sein, um Defekte zu reparieren, bei welchen ein Teil der Leitung, insbesondere ein Teil der Leitungslitze und/oder des Kerns der Leitung fehlt. Demnach kann fehlendes Material, beispielsweise des Kerns und/oder einer Leitungslitze ersetzt und/oder hergestellt werden. Dies kann eine schnelle Reparatur erlauben, insbesondere während des Betriebs und/oder ohne Bestandteile der Leitung (oder die Leitung selbst) vollständig tauschen zu müssen. Besonders vorteilhaft kann dies sein, um ein fehlendes Stück Leitungslitze zwischen zwei Leitungslitzenenden zu ersetzen bzw. herzustellen. Eine Leitung kann eine (mechanische) Spannung aufweisen. Bei einem Defekt kann es sein, dass der oder die Roboter die Leitungslitzenenden an der Leitung (zwar) anordnen können, allerdings ein Fügen durch Löten, beispielsweise aufgrund eines großen Abstands (z. B. 5cm) zwischen den Leitungslitzenenden unvorteilhaft wäre. Ein weiteres Annähern kann (potentiell) nur durch Aufprägen einer vergleichsweise größeren (mechanischen) Kraft möglich sein, insbesondere durch ein "Zusammenziehen" bzw. Annähern der Leitungsstücke. Es kann sein, dass dies nicht ohne weitere möglich ist. Durch die Sintereinheit kann (dennoch) eine Reparatur ermöglicht werden, insbesondere ohne eine (übermäßige) mechanische Kraft bzw. Spannung an der Leitung aufprägen zu müssen.

Ferner ist es vorstellbar, dass der Roboter eine Kommunikationseinheit zur Kommunikation, mit einem Backend, einem Benutzer und/oder zumindest einem weiteren Roboter aufweist, wodurch vorzugsweise die Roboter als Schwarm von Robotern bei der Reparatur zusammenwirken können.

Vorzugsweise weist ein Roboter, insbesondere ein erster und/oder zweiter Roboter, bevorzugt jeder Roboter eines Schwarms, eine (eigene) Kommunikationseinheit auf. Diese kann dazu eingerichtet sein, insbesondere über eine (kabellose) Datenverbindung (z. B. WLAN, Bluetooth, UHF, NFC, und/oder Internet) eine Kommunikation zu ermöglichen, beispielsweise mit einem Backend (z. B. einer zentralen Steuereinheit des Netzes bzw. des Netzbetreibers), einem Benutzer (z. B. eines Menschen vor Ort (aber in sicherer Entfernung zu der Leitung) und/oder einem (oder mehreren) weiteren Roboter(n). Dabei können unterschiedliche Roboter direkt miteinander und/oder über einen Benutzer und/oder ein Backend kommunizieren, um vorteilhafterweise in einem Zusammenwirken eine Reparatur (gemeinsam) durchzuführen. Es kann auch vorgesehen sein, dass jeder Roboter eine eigene (getrennte) Reparatur durchführt. Eine Kommunikation kann dabei vorteilhaft sein, insbesondere um Flugrouten und/oder Positionen bei der Reparatur auszutauschen, insbesondere um Unfälle, z. B. Kollisionen, zu vermeiden. Dadurch kann die Sicherheit erhöht werden und/oder Kosten minimiert werden.

Dabei kann die Kommunikationseinheit mit der Steuereinheit, insbesondere einer Recheneinheit und/oder Speichereinheit verbunden sein. Auf diesem Wege kann der Roboter von den (erfolgreichen) Reparaturen anderer Roboter Daten erhalten, insbesondere um eine eigene Reparatur, beispielsweise unter vergleichbaren Bedingungen, ebenfalls erfolgreich zu absolvieren. Dadurch kann, wie dies im Flugverkehr praktiziert wird, ein Roboter von den Fehlern und/oder Erfolgen anderer Roboter lernen. Dadurch kann die Qualität verbessert werden und/oder die Sicherheit erhöht werden.

Es kann vorgesehen sein, dass der Roboter ein Magazin aufweist, welches vorzugsweise zumindest eine Zuführvorrichtung für (neue) Leitungslitzen und/oder Spiralarmaturen aufweist. Vorzugsweise können zumindest zwei, drei oder vier Zuführvorrichtungen vorgesehen sein. Diese können Leitungslitzen und/oder Spiralarmaturen zur Leitung hinführen, wobei diese vorzugsweise durch eine (erste und/oder zweite) Matrize an der Leitung, insbesondere angepasst an den (eigentlichen) Verlauf der Leitungslitzen, angeordnet und/oder angedrückt werden. Anschließend können diese, beispielsweise durch eine Fügeeinheit und/oder Sintereinheit befestigt werden. Dabei kann das Magazin drehbar ausgestaltet sein, und sich vorzugsweise mit und/oder synchron mit einer ersten und/oder zweiten Matrize drehen. Dadurch kann eine passgenaue Anordnung an der Leitung erleichtert und/oder verbessert werden. Spiralarmaturen können dabei einen Leitungslitzenersatz und/oder ein Reparaturmittel aufweisen, welches beispielsweise durch die Reparatureinheit, Fügeeinheit und/oder Sintereinheit verarbeitet werden kann um die Leitung zu reparieren.

Vorzugsweise weist ein Roboter, insbesondere ein erster und/oder zweiter Roboter, bevorzugt jeder Roboter eines Schwarms, eine (eigene) oder mehrere Erfassungseinheit(en) auf, welches insbesondere zum Detektieren eines Defekts an der Leitung eingerichtet ist. Dabei kann die Erfassungseinheit eine Kamera, eine Infrarotkamera, eine Wärmebildkamera, eine Radarvorrichtung, eine Lidarvorrichtung, eine Beleuchtungseinrichtung (insbesondere zum Beleuchten für ein Erkennen und/oder bei der Durchführung der Reparatur) eine GPS-Vorrichtung und/oder eine Navigationseinheit zum Navigieren aufweisen. Der Roboter bzw. eine Steuereinheit des Roboters kann die Erfassungseinheit ansteuern um ein Detektieren eines (oder mehrere) Defekte einer Leitung durchzuführen. Vorzugsweise kann die Erfassungseinheit dazu eingerichtet sein dem Roboter beim Detektieren, Bewegen und/oder Reparieren ein Erfassen seiner Umgebung zu ermöglichen. Basierend auf den Daten der Erfassungseinheit kann die Steuereinheit den Roboter ansteuern, insbesondere Bewegen, Fliegen, Drehen (für eine Drehbewegung), Entlangbewegen et cetera, bevorzugt dabei auch Daten von anderen Robotern, insbesondere aus einem Schwarm, nutzen, welches vorzugsweise über die Kommunikationseinheit(en) ausgetauscht werden. Dadurch kann beispielsweise eine verbesserte (dreidimensionale) Navigation ermöglicht werden, wobei insbesondere Abstände besser ermittelbar sind durch Daten welche, z. B. von einem anderen Roboter, aus einem anderen Winkel erfasst wurden. Vorzugsweise weist ein Roboter, insbesondere ein erster und/oder zweiter Roboter, bevorzugt jeder Roboter eines Schwarms, eine (eigene) oder mehrere Anemometer auf, welches insbesondere zum Erfassen einer Windrichtung und/oder Windgeschwindigkeit eingerichtet ist.

Besonders bevorzugt kann es sein, dass die Befestigungseinheit, die Flugeinheit(en), die Reparatureinheit, die erste und/oder zweite Matrize, die Schutzmitteleinheit, die Fügeeinheit, die Sintereinheit, die Erfassungseinheit, das Anemometer, und/oder die Kommunikationseinheit, insbesondere durch Ansteuern durch die Steuereinheit, (reversibel) bewegbar sind, beispielsweise über zumindest einen Aktuator. Dadurch können diese in Abhängigkeit von ihrer Position bzw. der Position des Roboters relativ zu der Leitung, der Leitungslitze, dem Leitungslitzenende dem Roboter und/oder zumindest einem anderen Roboter, ihre Position und/oder Ausrichtung anpassen. Dies kann vorteilhaft sein, um nicht mit anderen Komponenten, dem (eigenen) Roboter und/oder anderen Robotern zu kollidieren oder die Reparatur zu behindern. Beispielsweise kann die Fügeeinheit und/oder die Sintereinheit bewegbar sein, und insbesondere Ihre Position unterhalb (bzw. oberhalb) des Roboters, z. B. zwischen Roboter und Leitung einnehmen, wobei alternativ auch eine Positionierung (in Leitungsrichtung) vor oder nach dem Roboter denkbar ist, beispielsweise um eine Reparatur eines Defekts an einem Leitungsabschnitt zu ermöglichen, welcher zwischen einem ersten und einem zweiten Roboter liegt.

Die obenstehende Aufgabe wird gemäß einem zweiten Aspekt gelöst durch ein erfindungsgemäßes Verfahren zur Reparatur einer Leitung, insbesondere einer Mittel- oder Hochspannungsleitung, aufweisend
- Bereitstellen zumindest eines Roboters, insbesondere gemäß dem ersten Aspekt, mit einer Reparatureinheit die dazu eingerichtet ist, eine an der Leitung angreifende Drehbewegung durchzuführen, um eine Reparatur (zumindest eines Defekts) durchzuführen,
- Detektieren, insbesondere durch den Roboter, eines Defekts der Leitung, insbesondere einer von der Leitung abstehende Leitungslitze, beispielsweise (abstehenden und/oder verbogenen) Leitungslitzenenden (der Leitungslitze),
- Bewegen des Roboters zu dem Defekt der Leitung,
- Reparieren des Defekts der Leitung durch den Roboter, wobei die Reparatureinheit eine an der Leitung angreifende Drehbewegung durchführt, um den Defekt der Leitung zu reparieren.

Dabei kann es sich um ein computer-implementiertes Verfahren handeln. Das Verfahren kann dabei zumindest teilweise durch einen Computer und/oder eine Steuereinheit durchgeführt werden. Dabei kann die Steuereinheit den Roboter ansteuern um (bzw. woraufhin) das Detektieren, Bewegen und/oder Reparieren durchzuführen (bzw. von dem Roboter durchgeführt wird). Dabei können die Aktionen bzw. Merkmale in der dargestellten Reihenfolge, insbesondere wiederholt, durchgeführt werden. Auch eine andere Reihenfolge kann, sofern technisch sinnvoll, vorgesehen sein. Vorzugsweise kann das Verfahren während und/oder im Anschluss an eine Störung der Leitung, z. B. bei Spannungsausfall initiiert werden, beispielsweise durch einen Benutzer.

Das Detektieren kann dabei durch die Erfassungseinheit des Roboters und/oder die Erfassungsvorrichtung der Flugeinheit durchgeführt werden. Es kann vorgesehen sein, dass für das Detektieren, Bewegen und/oder Reparieren weitere (externe) Daten verwendet werden, welches beispielsweise in einem Speicher einer Steuereinheit der Drohne gespeichert sein können und/oder durch die Kommunikationseinheit des Roboters empfangen werden können. Dabei kann es sich um Bilder (z. B. der Leitung(en) und/oder des Leitungsnetzes), Lagepläne (z. B. der Leitung(en) und/oder des Leitungsnetzes), Bauzeichnungen (z. B. der Leitung(en) und/oder des Leitungsnetzes), geografische Daten, Windbedingungen und/oder Temperaturkarten (z. B. Wetterprognosen) handeln.

Damit ergeben sich in Bezug auf ein erfindungsgemäßes Verfahren gemäß dem zweiten Aspekt die gleichen Vorteile, wie sie bereits in Bezug auf einen erfindungsgemäßen Roboter gemäß dem ersten Aspekt beschrieben worden sind.

Im Rahmen der Erfindung kann es von Vorteil sein, dass das Detektieren und/oder Bewegen ein Fliegen des Roboters umfasst, wobei insbesondere nach dem Bewegen ein reversibel lösbares Befestigen des zumindest einen Roboters an der Leitung durchgeführt wird.

Dabei kann das Befestigen durch eine Befestigungseinheit, eine erste und/oder zweite Matrize durchgeführt werden, welche insbesondere dafür von der Steuereinheit angesteuert werden.

Im Rahmen der Erfindung ist es denkbar, dass das Reparieren des Defekts der Leitung ein Entlangbewegen des Roboters an der Leitung (insbesondere entlang der Leitungsrichtung) umfasst, insbesondere (z. B. aufgrund einer Drehbewegung) entlang einer von der Leitung abstehenden Leitungslitze, beispielsweise zumindest einem Leitungslitzenende, vorzugsweise entlang der ursprünglichen spiralförmigen Anordnung der Leitungslitze, wodurch die Leitung, insbesondere die Leitungslitze, beispielsweise das zumindest eine Leitungslitzenende, durch die Reparatureinheit des Roboters an der Leitung durch die an der Leitung angreifende Drehbewegung positioniert wird, wobei sich insbesondere die Leitungslitzenenden annähern.

Wie oben beschrieben, kann der Roboter, insbesondere die erste und/oder zweite Matrize dabei eine Drehbewegung um die Leitung und/oder ein Entlangbewegen entlang der Leitung durchführen, insbesondere durch ein Ansteuern durch die Steuereinheit. Dadurch können abstehende und/oder verbogene Leitungslitzen(enden) wieder an der Leitung positioniert werden.

Es kann im Rahmen der Erfindung vorgesehen sein, dass das Reparieren, insbesondere das Entlangbewegen, durch ein Entlangbewegen der Reparatureinheit, vorzugsweise einer ersten Matrize und/oder zweiten Matrize, durchgeführt wird, wobei die Reparatureinheit, insbesondere die erste Matrize und/oder die zweite Matrize, sich dem Defekt der Leitung, insbesondere zumindest einem Leitungslitzenende, annähert.

Dabei kann das Entlangbewegen insbesondere entlang der Leitung(srichtung) erfolgen, vorzugsweise in Kombination mit einer Drehbewegung, wodurch vorteilhafterweise ein Positionieren erfolgen, ein Andrücken der Leitungslitzen(enden) und/oder ein (ursprünglicher) spiralförmiger Verlauf bzw. eine Anordnung der Leitungslitze nachgebildet werden kann, um vorteilhafterweise die Leitungslitzen(enden) für ein Fügen und/oder Sintern zu positionieren.

Dabei kann die Drehbewegung und/oder ein Entlangbewegen kontinuierlich, gleichmäßig, konstant, und/oder kontrolliert erfolgen. Vorzugsweise kann dabei ein Entlangbewegen an zumindest ein Leitungslitzenende erfolgen. Besonders bevorzugt kann es sein, wenn sich eine erste Matrize an ein erstes Leitungslitzenende annähert und eine zweite Matrize an ein zweites Leitungslitzenende, wobei sich vorzugsweise die erste und zweite Matrize, und insbesondere dadurch auch das erste und zweite Leitungslitzenende, aufeinander zu bewegen. Dies kann insbesondere vorteilhaft sein bei einem Roboter mit einer ersten und zweiten Matrize.

Es ist ferner denkbar, dass das Reparieren des Defekts der Leitung ein Fügen von zwei Leitungslitzenenden einer Leitungslitze der Leitung umfasst, wobei das Fügen ein Löten, Verschweißen, Kleben und/oder Verstemmen umfasst.

Dabei kann eine Steuereinheit eine Fügeeinheit ansteuern, woraufhin diese das Fügen durchführt. Dabei können die, insbesondere vorher durch die Drehbewegung und/oder das Entlangbewegen positionierten Leitungslitzenenden durch das Fügen verbunden werden. Beispielsweise können diese zusammengeschweißt werden. Vorzugsweise kann (zuerst) eine Drehbewegung, ein Entlangbewegen und/oder Andrücken erfolgen, und anschließend ein Fügen. Dabei kann das Reparieren ein Einsetzen von einem (zusätzlichen und/oder neuen) Leitungsstück bzw. Leitungslitze umfassen, welches bevorzugt vor dem Fügen durchgeführt wird. Beispielsweise kann dies durch ein Sintern durchgeführt werden. Alternativ oder zusätzlich kann es vorgesehen sein, dass ein Leitungsstück, insbesondere eine Leitungslitze von dem Roboter eingesetzt wird, welches vorher insbesondere von dem Roboter mitgeführt wurde, beispielsweise durch einen Greifarm, welcher vorteilhafterweise gleichzeitig zum Einsetzen verwendet werden kann.

Auch ist es denkbar, dass das Reparieren des Defekts der Leitung ein Sintern umfasst, wobei insbesondere ein Leitungsmaterial von einer Sintereinheit zwischen den zwei Leitungslitzenenden einer Leitungslitze der Leitung erzeugt wird.

Dabei kann eine Steuereinheit die Sintereinheit ansteuern, um ein Sintern durchzuführen. Vorzugsweise kann (zuerst) eine Drehbewegung, ein Entlangbewegen und/oder Andrücken erfolgen, und anschließend ein Sintern. Dabei kann das Reparieren, insbesondere vor dem Sintern, ein Einsetzen von einem (zusätzlichen und/oder neuen) Leitungsstück bzw. Leitungslitze umfassen, welches bevorzugt vor dem Fügen durchgeführt wird, beispielsweise durch den (oben beschriebenen) Greifarm.

Im Rahmen der Erfindung ist es optional möglich, dass das Reparieren des Defekts der Leitung von zumindest zwei Robotern durchgeführt wird, wobei vorzugsweise ein erster Roboter (insbesondere eine erste Matrize des ersten Roboters) ein Entlangbewegen entlang der Leitung hin zu einem ersten Leitungslitzenende und ein zweiter Roboter (insbesondere eine zweite Matrize des zweiten Roboters) ein Entlangbewegen entlang der Leitung hin zu einem zweiten Leitungslitzenende durchführt, wobei sich insbesondere der erste Roboter und der zweite Roboter, und insbesondere die erste und zweite Matrize, einander annähern.

Durch die zwei Roboter kann demnach auch ein längeres Leitungsstück, beispielsweise über 50 Meter, repariert werden. Dabei können auch weit abstehende und/oder stark verbogene Leitungslitzen(enden) durch ein Zusammenwirken der Roboter wieder in Position gebracht werden. Anschließend kann einer der Roboter den Defekt durch Fügen und/oder Sintern reparieren.

Die obenstehende Aufgabe wird gemäß einem dritten Aspekt gelöst durch ein erfindungsgemäßes Computerprogrammprodukt, umfassend Befehle, die bei der Ausführung des Computerprogrammprodukts durch einen Computer diesen veranlassen, das Verfahren gemäß dem zweiten Aspekt zu implementieren.

Damit ergeben sich in Bezug auf ein erfindungsgemäßes Computerprogrammprodukt gemäß dem dritten Aspekt die gleichen Vorteile, wie sie bereits in Bezug auf einen erfindungsgemäßen Roboter gemäß dem ersten Aspekt und/oder ein erfindungsgemäßes Verfahren gemäß dem zweiten Aspekt beschrieben worden sind.

Die obenstehende Aufgabe wird gemäß einem vierten Aspekt gelöst durch einen erfindungsgemäßen computerlesbaren Datenträger, in welchem Befehle hinterlegt sind, die bei der Ausführung durch einen Computer diesen veranlassen, das Verfahren gemäß dem zweiten Aspekt durchzuführen.

Damit ergeben sich in Bezug auf einen erfindungsgemäßen computerlesbaren Datenträger gemäß dem vierten Aspekt die gleichen Vorteile, wie sie bereits in Bezug auf einen erfindungsgemäßen Roboter gemäß dem ersten Aspekt und/oder ein erfindungsgemäßes Verfahren gemäß dem zweiten Aspekt und/oder ein erfindungsgemäßes Computerprogrammprodukt gemäß dem dritten Aspekt beschrieben worden sind.

Die obenstehende Aufgabe wird gemäß einem fünften Aspekt gelöst durch eine erfindungsgemäße Steuereinheit, aufweisend eine Recheneinheit und eine Speichereinheit, in welcher Befehle hinterlegt sind, welche bei zumindest teilweiser Ausführung durch die Recheneinheit ein Verfahren gemäß dem zweiten Aspekt durchführt.

Dabei kann ein Roboter eine (derartige) Steuereinheit aufweisen. Vorzugsweise weisen der erste und/oder zweite Roboter, insbesondere jeder Roboter eines Schwarms, eine Steuereinheit auf. Die Steuereinheiten können dabei über ein Ansteuern einer jeweiligen Kommunikationseinheit der Roboter, Daten miteinander austauschen, beispielsweise um ein Zusammenwirken für eine (gemeinsame) Reparatur zu ermöglichen.

Es kann vorgesehen sein, dass die Energieversorgungseinheit, der Transformator, der Wechselrichter, die Befestigungseinheit, die Flugeinheit, die Reparatureinheit, die erste und/oder zweite Matrize, die Schutzmitteleinheit, die Fügeeinheit, die Sintereinheit, die Erfassungseinheit, das Anemometer, die Befestigungseinheit, und/oder die Kommunikationseinheit mit der Steuereinheit, insbesondere über eine Datenverbindung, verbunden sind, wodurch vorzugsweise ein Datenaustausch, beispielsweise von Steuersignale, ermöglicht wird und/oder die Steuereinheit die Komponenten ansteuern kann.

Damit ergeben sich in Bezug auf eine erfindungsgemäße Steuereinheit gemäß dem fünften Aspekt die gleichen Vorteile, wie sie bereits in Bezug auf einen erfindungsgemäßen Roboter gemäß dem ersten Aspekt und/oder ein erfindungsgemäßes Verfahren gemäß dem zweiten Aspekt und/oder ein erfindungsgemäßes Computerprogrammprodukt gemäß dem dritten Aspekt und/oder einen erfindungsgemäßen computerlesbaren Datenträger gemäß dem vierten Aspekt beschrieben worden sind.

Die obenstehende Aufgabe wird gemäß einem sechsten Aspekt gelöst durch einen erfindungsgemäßen Schwarm von Robotern, umfassend zumindest zwei Roboter gemäß dem ersten Aspekt, wobei die Roboter dazu eingerichtet sind, im Zusammenwirken als Schwarm eine Reparatur einer Leitung, insbesondere einer Mittel- oder Hochspannungsleitung, durchzuführen.

Dabei kann der Schwarm, insbesondere einer, zwei oder mehr der Roboter, das Verfahren gemäß dem zweiten Aspekt durchführen.

Damit ergeben sich in Bezug auf einen erfindungsgemäßen Schwarm gemäß dem sechsten Aspekt die gleichen Vorteile, wie sie bereits in Bezug auf einen erfindungsgemäßen Roboter gemäß dem ersten Aspekt und/oder ein erfindungsgemäßes Verfahren gemäß dem zweiten Aspekt und/oder ein erfindungsgemäßes Computerprogrammprodukt gemäß dem dritten Aspekt und/oder einen erfindungsgemäßen computerlesbaren Datenträger gemäß dem vierten Aspekt und/oder eine erfindungsgemäße Steuereinheit gemäß dem fünften Aspekt beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt:
- Fig. 1: einen Roboter
- Fig. 2: einen Schwarm
- Fig. 3: ein Verfahren.

In den nachfolgenden Figuren werden für die gleichen technischen Merkmale, auch von unterschiedlichen Ausführungsbeispielen, die identischen Bezugszeichen verwendet.

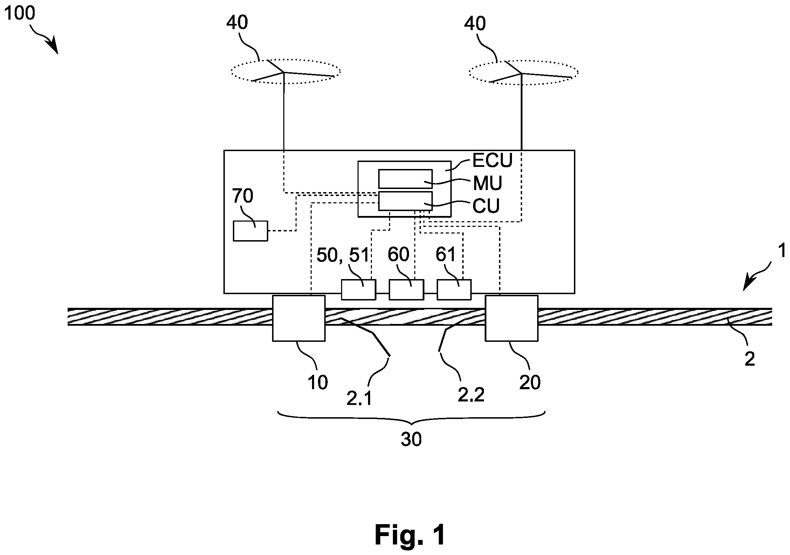

Figur 1 zeigt einen Roboter 100 zur Reparatur einer Leitung 1, insbesondere einer Mittel- oder Hochspannungsleitung, wobei der Roboter 100 eine Reparatureinheit 30 aufweist, welche dazu eingerichtet ist, eine an der Leitung 1 angreifende Drehbewegung durchzuführen, um eine Reparatur eines Defekts der Leitung durchzuführen. Dabei weist die Leitung 1 eine bzw. mehrere Leitungslitzen 2 auf, wobei der Defekt insbesondere eine gerissene Leitungslitze 2 mit zwei Leitungslitzenenden 2.1, 2.2 aufweist, beispielsweise einem ersten Leitungslitzenende 2.1 und einem zweiten Leitungslitzenende 2.2. Die Leitungslitzen 2 sind dabei (ohne Defekt) spiralförmig an der Leitung angeordnet. Die abstehenden und/oder verbogenen Leitungslitzenenden 2.1, 2.2, können durch die Reparatureinheit 30 des Roboters, insbesondere eine erste Matrize 10 und/oder eine zweite Matrize 20, durch eine Drehbewegung und/oder ein Entlangbewegen 141 wieder an der Leitung 1 angeordnet werden. Dabei sind die erste und zweite Matrize relativ zueinander, relativ zu dem Roboter und/oder aufeinander zu bewegbar. Vorzugsweise können die erste Matrize 10 und/oder zweite Matrize 20 durch bzw. bei einem Entlangbewegen entlang der Leitung 1, insbesondere aufeinander zu, eine Drehbewegung durchführen, welche vorzugsweise gegenläufig ist, beispielsweise kann die erste Matrize 10 sich gegen den Uhrzeigersinn drehen und die zweite Matrize 20 im Uhrzeigersinn, insbesondere in Abhängigkeit von der Anordnung der Leitungslitzen. Der Roboter 100 weist eine (bzw. zwei) Flugeinheit(en) 40 auf, welche dazu eingerichtet sein kann, den Roboter 100 zu der Leitung 1 zu bewegen oder davon zu entfernen. Weiterhin gezeigt sind eine Schutzmitteleinheit 50 (und/oder Reinigungseinheit 51), eine Fügeeinheit 60, eine Sintereinheit 61, eine Kommunikationseinheit 70 und eine Steuereinheit ECU, umfassend eine Recheneinheit CU und eine Speichereinheit MU. Dabei kann die Steuereinheit ECU, insbesondere die Recheneinheit CU, mit der ersten Matrize 10, der zweiten Matrize 20, der Reparatureinheit 30, der Flugeinheit 40, der Schutzmitteleinheit 50, der Fügeeinheit 60, der Sintereinheit 61, und/oder der Kommunikationseinheit 70 verbunden sein, insbesondere über eine Datenverbindung für einen Datenaustausch, wodurch vorzugsweise die Steuereinheit ECU die (genannten) Komponenten ansteuern kann.

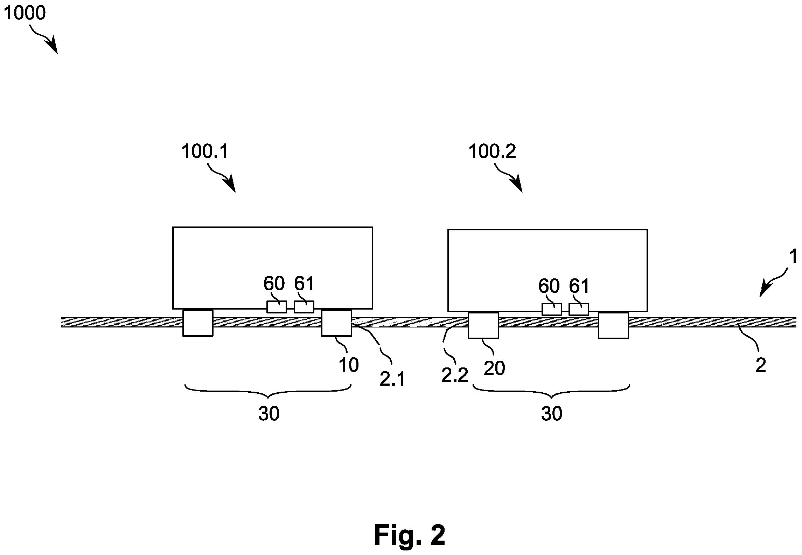

Figur 2 zeigt einen Schwarm 1000 von Robotern 100, umfassend zumindest einen ersten Roboter 100.1 und einen zweiten Roboter 100.2, wobei die Roboter 100.1, 100.2 dazu eingerichtet sind, im Zusammenwirken als Schwarm 1000 eine Reparatur einer Leitung 1, insbesondere einer Mittel- oder Hochspannungsleitung, durchzuführen. Dabei sind im Vergleich zu Figur 1 nur einige der Bestandteile bzw. Komponenten gezeigt. Der erste Roboter 100.1 kann eine Reparatureinheit 30, insbesondere eine erste Matrize 10, aufweisen, welche insbesondere ein erstes Leitungslitzenende 2.1 durch eine Drehbewegung und/oder ein Entlangbewegen 141.1 entlang der Leitung 1, vorzugsweise in Richtung des zweiten Roboters 100.2, an der Leitung 1 positionieren. Der zweite Roboter 100.2 kann eine Reparatureinheit 30, insbesondere eine zweite Matrize 20, aufweisen, welche insbesondere ein zweites Leitungslitzenende 2.2 durch eine Drehbewegung und/oder ein Entlangbewegen 141.2 entlang der Leitung 1, vorzugsweise in Richtung des ersten Roboters 100.1, an der Leitung 1 positionieren. Wenn der erste Roboter 100.1 und/oder zweite Roboter 100.2 das Ende des ersten Leitungslitzenendes 2.1 und/oder zweiten Leitungslitzenendes 2.2 erreicht haben, kann der erste Roboter 100.1 und/oder zweite Roboter 100.2, beispielsweise durch eine jeweilige (bewegbare) Fügeeinheit 60 und/oder Sintereinheit 61, das erste Leitungslitzenende 2.1 und/oder das zweite Leitungslitzenende 2.2 an der Leitung 1 und/oder an dem jeweils anderen Leitungslitzenende 2.1, 2.2 befestigen, beispielsweise durch Fügen 142 und/oder Sintern 143.

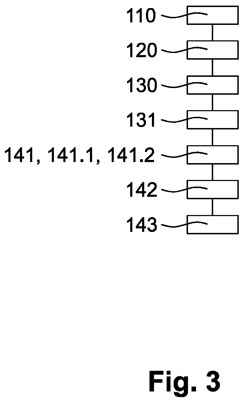

Figur 3 zeigt ein Verfahren zur Reparatur einer Leitung 1, insbesondere einer Mittel- oder Hochspannungsleitung, aufweisend
- Bereitstellen 110 zumindest eines Roboters 100, insbesondere gemäß Figur 1 oder 2, mit einer Reparatureinheit 30 die dazu eingerichtet ist, eine an der Leitung 1 angreifende Drehbewegung durchzuführen, um eine Reparatur zumindest eines Defekts durchzuführen,
- Detektieren 120, insbesondere durch den Roboter 100, eines Defekts der Leitung 1, insbesondere einer von der Leitung 1 abstehende Leitungslitze 2, beispielsweise abstehenden und/oder verbogenen Leitungslitzenenden 2.1, 2.2 der Leitungslitze,
- Bewegen 130 des Roboters 100 zu dem Defekt der Leitung 1,
- Reparieren 140 des Defekts der Leitung 1 durch den Roboter 100, wobei die Reparatureinheit 30 eine an der Leitung 1 angreifende Drehbewegung durchführt, um den Defekt der Leitung 1 zu reparieren.

Dabei kann es vorgesehen sein, dass das Reparieren 140 des Defekts der Leitung 1 ein Entlangbewegen 141 des Roboters 100 an der Leitung 1 umfasst, insbesondere entlang einer von der Leitung 1 abstehenden Leitungslitze 2, beispielsweise zumindest einem Leitungslitzenende 2.1, 2.2, vorzugsweise entlang der ursprünglichen spiralförmigen Anordnung der Leitungslitze 2, wodurch die Leitung 1, insbesondere die Leitungslitze 2, beispielsweise das zumindest eine Leitungslitzenende 2.1, 2.2, durch die Reparatureinheit 30 des Roboters 100 an der Leitung 1 durch die an der Leitung 1 angreifende Drehbewegung positioniert wird, wobei sich insbesondere die Leitungslitzenenden 2.1, 2.2 annähern.

Bei einem Schwarm 1000, kann es vorgesehen sein, dass das Reparieren 140 des Defekts der Leitung 1 von zumindest zwei Robotern 100 durchgeführt wird z. B. gemäß Figur 2, wobei vorzugsweise ein erster Roboter 100.1 ein Entlangbewegen 141.1 entlang der Leitung 1 hin zu einem ersten Leitungslitzenende 2.1 und ein zweiter Roboter 100.2 ein Entlangbewegen 141.2 entlang der Leitung 1 hin zu einem zweiten Leitungslitzenende 2.2 durchführt, wobei sich insbesondere der erste Roboter 100.1 und der zweite Roboter 100.2 einander annähern.

Es kann vorgesehen sein, dass das Reparieren 140 des Defekts der Leitung 1 ein Fügen 142 von zwei Leitungslitzenenden 2.1, 2.2 einer Leitungslitze 2 der Leitung 1 umfasst, wobei das Fügen 142 ein Löten, Verschweißen, Kleben und/oder Verstemmen umfasst.

Alternativ oder zusätzlich kann es vorgesehen sein, dass das Reparieren 140 des Defekts der Leitung 1 ein Sintern 143 umfasst, wobei insbesondere ein Leitungsmaterial von einer Sintereinheit 61 zwischen den zwei Leitungslitzenenden 2.1, 2.2 einer Leitungslitze 2 der Leitung 1 erzeugt wird.

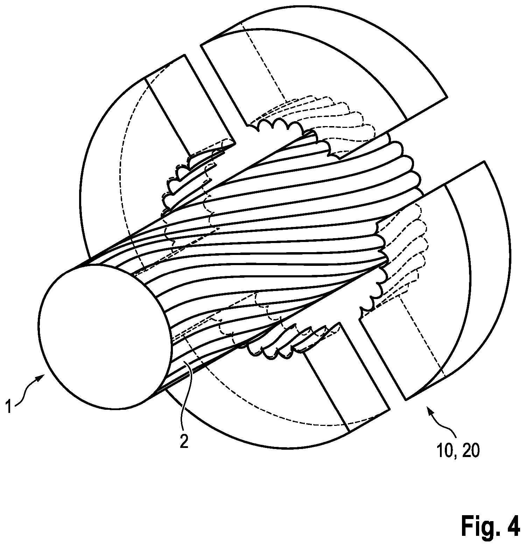

Figur 4 zeigt eine erste bzw. zweite Matrize 10, 20, welche beispielhaft vierteilig ausgestaltet sein kann. Dabei kann jedes der vier Matrizenteile im Wesentlichen einen Viertelkreis bilden. Es kann vorgesehen sein, dass die erste und/oder zweite Matrize 10, 20, insbesondere die Matrizenteile, auf der Innenseite bzw. der Leitung 1 zugewandten Seite, eine geometrische Ausformung aufweisen, beispielsweise eine Spiralform, welche vorzugsweise an die Leitung 1, insbesondere an die Steigung der Leitungslitzen 2, angepasst ist. Dadurch kann ein besonders vorteilhaftes Bewegen entlang der Leitung 2 ermöglicht werden.

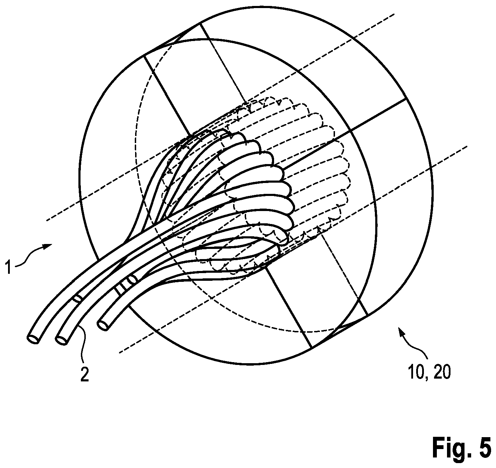

Figur 5 zeigt in Anlehnung an Figur 4 beispielhaft eine erste bzw. zweite Matrize 10, 20, welche vierteilig ausgestaltet ist. Dabei kann in Figur 5 der Zustand geschlossen sein, wodurch die Leitung 1 (bündig) umschlossen werden kann. Dadurch kann eine besonders gute Führung entlang der Leitungslitzen 2 (bzw. der eigentlichen Position und/oder dem gewünschten Verlauf) ermöglicht werden. Demnach kann es vorgesehen sein, dass unterschiedliche Matrizenteile beispielsweise voneinander beabstandet sind und/oder einstellbar aneinander reversibel lösbar befestigt sind, beispielsweise über einen Linearantrieb zwischen (jeweils) benachbarten Matrizenteilen. Dadurch kann vorzugsweise ein Öffnen und/oder Schließen der Matrizenteile erfolgen.

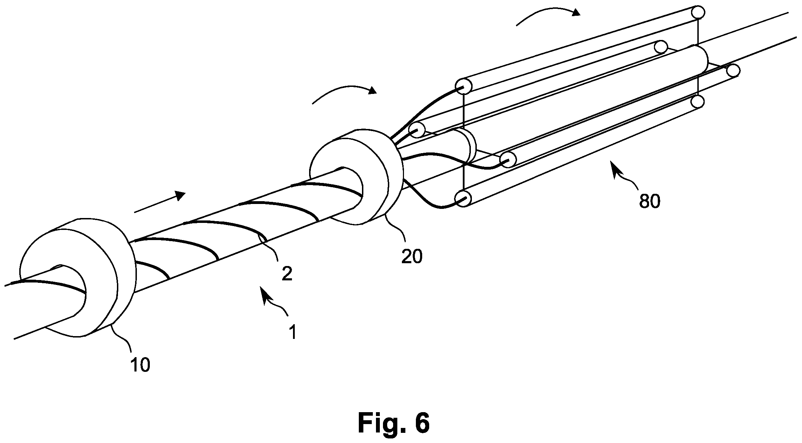

Figur 6 zeigt eine erste Matrize 10 und eine zweite Matrize 20 sowie eine Magazin 80, welche an einer Leitung 1 mit Leitungslitzen 2 drehbar angeordnet sind. Dabei kann das Magazin 80 vorzugsweise Leitungslitzen 2 und/oder Spiralarmaturen (z.B. aufweisen Reparaturmittel) an die Leitung 2 abgeben, welche insbesondere (nach Abgabe) an der Leitung 2 angeordnet werden können. Dadurch können Leitungslitzen 2 ersetzt und/oder repariert werden. Vorzugsweise können sich (beispielhaft) die zweite Matrize 20 und das Magazin dabei gleichgerichtet und/oder synchron um die Leitung 2 drehen. Dadurch kann eine besonders effiziente Reparatur ermöglicht werden.

### Bezugszeichenliste

- 1: Leitung
- 2: Leitungslitze
- 2.1: erstes Leitungslitzenende
- 2.2: zweites Leitungslitzenende

- 10: erste Matrize
- 20: zweite Matrize
- 30: Reparatureinheit
- 40: Flugeinheit
- 50: Schutzmitteleinheit
- 51: Reinigungseinheit
- 60: Fügeeinheit
- 61: Sintereinheit
- 70: Kommunikationseinheit
- 80: Magazin
- 100: Roboter
- 100.1: erster Roboter
- 100.2: zweiter Roboter
- 1000: Schwarm

- ECU: Steuereinheit
- CU: Recheneinheit
- MU: Speichereinheit

- 110: Bereitstellen zumindest eines Roboters
- 120: Detektieren eines Defekts der Leitung
- 130: Bewegen des Roboters zu dem Defekt
- 131: Befestigen des Roboters an der Leitung
- 140: Reparieren des Defekts
- 141: Entlangbewegen des Roboters an der Leitung
- 141.1: Entlangbewegen des ersten Roboters an der Leitung
- 141.2: Entlangbewegen des zweiten Roboters an der Leitung
- 142: Fügen von zwei Leitungslitzenenden
- 143: Sintern

## Patentansprüche

1. Roboter (100) zur Reparatur einer Leitung (1), insbesondere einer Mittel- oder Hochspannungsleitung, wobei der Roboter (100) eine Reparatureinheit (30) aufweist, welche dazu eingerichtet ist, eine an der Leitung (1) angreifende Drehbewegung durchzuführen, um eine Reparatur durchzuführen.

2. Roboter (100) nach Anspruch 1,
**dadurch gekennzeichnet,**
**dass** der Roboter (100) eine Energieversorgungseinheit aufweist, welche den Roboter (100) mit elektrischer Energie versorgt, wobei insbesondere die Energieversorgungseinheit dazu eingerichtet ist, eine induktive Kopplung und/oder elektrische Verbindung zu der Leitung (1) bereitzustellen, und/oder dass der Roboter (100) dazu eingerichtet ist, eine Reparatur einer spannungsführenden Leitung (1), insbesondere einer spannungsführenden Mittel- oder Hochspannungsleitung, durchzuführen.

3. Roboter (100) nach einem der vorhergehenden Ansprüche,
**dadurch gekennzeichnet,**
**dass** die Reparatureinheit (30) eine erste Matrize (10) und/oder zweite Matrize (20) aufweist, welche dazu eingerichtet ist
- eine Leitung (1) zu umgreifen,
- eine an der Leitung (1) angreifende Drehbewegung durchzuführen, wobei sich vorzugsweise die erste Matrize (10) und/oder zweite Matrize (20) relativ zu der Leitung (1) dreht,
- den Roboter (100) an der Leitung (1), insbesondere reversibel lösbar, zu befestigen,
- den Roboter (100) entlang der Leitung (1) zu bewegen und/oder zu führen, und/oder
- von der Leitung (1) abstehende Leitungslitzen (2), insbesondere Leitungslitzenenden (2.1, 2.2), vorzugsweise entlang ihrer ursprünglichen spiralförmigen Anordnung, an der Leitung (1) durch die an der Leitung (1) angreifende Drehbewegung zu positionieren um eine Reparatur durchzuführen.

4. Roboter (100) nach einem der vorhergehenden Ansprüche,
**dadurch gekennzeichnet,**
**dass** der Roboter (100) eine, insbesondere reversibel an dem Roboter (100) befestigbare, Flugeinheit (40) aufweist, welche dazu eingerichtet ist den Roboter (100), insbesondere selbstständig und/oder über die Luft, zu einer zu reparierenden Leitung (1) zu bewegen oder von dieser zu entfernen.

5. Roboter (100) nach einem der vorhergehenden Ansprüche,
**dadurch gekennzeichnet,**
**dass** der Roboter (100) eine Befestigungseinheit zum reversiblen Befestigen des Roboters (100) an einer Leitung (1) aufweist, und/oder
**dass** der Roboter (100) eine Schutzmitteleinheit (50) aufweist, die dazu eingerichtet ist ein Schutzmittel, insbesondere ein Fett, an der Leitung (1) anzuordnen.

6. Roboter (100) nach einem der vorhergehenden Ansprüche,
**dadurch gekennzeichnet,**
**dass** der Roboter (100) eine Fügeeinheit (60) zum Reparieren eines Defekts der Leitung (1) aufweist, insbesondere zum Fügen einer Leitungslitze (2) der Leitung (1), vorzugsweise von Leitungslitzenenden (2.1, 2.2), und/oder
**dass** der Roboter (100) eine Sintereinheit (61) zum Reparieren eines Defekts der Leitung (1) aufweist, insbesondere zum Erzeugen eines Leitungsmaterials.

7. Roboter (100) nach einem der vorhergehenden Ansprüche,
**dadurch gekennzeichnet,**
**dass** der Roboter (100) eine Kommunikationseinheit (70) zur Kommunikation, mit einem Backend, einem Benutzer und/oder zumindest einem weiteren Roboter (100) aufweist, wodurch vorzugsweise die Roboter (100) als Schwarm (1000) von Robotern (100) bei der Reparatur zusammenwirken können.

8. Verfahren zur Reparatur einer Leitung (1), insbesondere einer Mittel- oder Hochspannungsleitung, aufweisend
- Bereitstellen (110) zumindest eines Roboters (100), mit einer Reparatureinheit (30) die dazu eingerichtet ist, eine an der Leitung (1) angreifende Drehbewegung durchzuführen, um eine Reparatur durchzuführen,
- Detektieren (120), insbesondere durch den Roboter (100), eines Defekts der Leitung (1), insbesondere einer von der Leitung (1) abstehende Leitungslitze (2), beispielsweise Leitungslitzenenden (2.1, 2.2),
- Bewegen (130) des Roboters (100) zu dem Defekt der Leitung (1),
- Reparieren (140) des Defekts der Leitung (1) durch den Roboter (100), wobei die Reparatureinheit (30) eine an der Leitung (1) angreifende Drehbewegung durchführt, um den Defekt der Leitung (1) zu reparieren.

9. Verfahren nach dem vorhergehenden Anspruch,
**dadurch gekennzeichnet,**
**dass** das Detektieren (120) und/oder Bewegen (130) ein Fliegen des Roboters (100) umfasst, wobei insbesondere nach dem Bewegen (130) ein reversibel lösbares Befestigen (131) des zumindest einen Roboters (100) an der Leitung (1) durchgeführt wird.

10. Verfahren nach einem der vorhergehenden Verfahrensansprüchen,
**dadurch gekennzeichnet,**
**dass** das Reparieren (140) des Defekts der Leitung (1) ein Entlangbewegen (141) des Roboters (100) an der Leitung (1) umfasst, insbesondere entlang einer von der Leitung (1) abstehenden Leitungslitze (2), beispielsweise zumindest einem Leitungslitzenende (2.1, 2.2), vorzugsweise entlang der ursprünglichen spiralförmigen Anordnung der Leitungslitze (2), wodurch die Leitung (1), insbesondere die Leitungslitze (2), beispielsweise das zumindest eine Leitungslitzenende (2.1, 2.2), durch die Reparatureinheit (30) des Roboters (100) an der Leitung (1) durch die an der Leitung (1) angreifende Drehbewegung positioniert wird, wobei sich insbesondere die Leitungslitzenenden (2.1, 2.2) annähern.

11. Verfahren nach einem der vorhergehenden Verfahrensansprüchen,
**dadurch gekennzeichnet,**
**dass** das Reparieren (140), insbesondere das Entlangbewegen (141), durch ein Entlangbewegen (141) der Reparatureinheit (30), vorzugsweise einer ersten Matrize (10) und/oder zweiten Matrize (20), durchgeführt wird, wobei die Reparatureinheit (30), insbesondere die erste Matrize (10) und/oder die zweite Matrize (20), sich dem Defekt der Leitung (1), insbesondere zumindest einem Leitungslitzenende (2.1, 2.2), annähert.

12. Verfahren nach einem der vorhergehenden Verfahrensansprüchen,
**dadurch gekennzeichnet,**
**dass** das Reparieren (140) des Defekts der Leitung (1) ein Fügen (142) von zwei Leitungslitzenenden (2.1, 2.2) einer Leitungslitze (2) der Leitung (1) umfasst, wobei das Fügen (142) ein Löten, Verschweißen, Kleben und/oder Verstemmen umfasst, und/oder dass das Reparieren (140) des Defekts der Leitung (1) ein Sintern (143) umfasst, wobei insbesondere ein Leitungsmaterial von einer Sintereinheit (61) zwischen den zwei Leitungslitzenenden (2.1, 2.2) einer Leitungslitze (2) der Leitung (1) erzeugt wird.

13. Verfahren nach einem der vorhergehenden Verfahrensansprüchen,
**dadurch gekennzeichnet,**
**dass** das Reparieren (140) des Defekts der Leitung (1) von zumindest zwei Robotern (100) durchgeführt wird, wobei vorzugsweise ein erster Roboter (100.1) ein Entlangbewegen (141.1) entlang der Leitung (1) hin zu einem ersten Leitungslitzenende (2.1) und ein zweiter Roboter (100.2) ein Entlangbewegen (141.2) entlang der Leitung (1) hin zu einem zweiten Leitungslitzenende (2.2) durchführt, wobei sich insbesondere der erste Roboter (100.1) und der zweite Roboter (100.2) einander annähern.

14. Computerprogrammprodukt, umfassend Befehle, die bei der Ausführung des Computerprogrammprodukts durch einen Computer diesen veranlassen, das Verfahren nach einem der vorhergehenden Ansprüche zu implementieren.

15. Computerlesbarer Datenträger, in welchem Befehle hinterlegt sind, die bei der Ausführung durch einen Computer diesen veranlassen, das Verfahren nach einem der vorhergehenden Ansprüche durchzuführen.

16. Steuereinheit (ECU), aufweisend eine Recheneinheit (CU) und eine Speichereinheit (MU), in welcher Befehle hinterlegt sind, welche bei zumindest teilweiser Ausführung durch die Recheneinheit (CU) ein Verfahren nach einem der vorhergehenden Ansprüche durchführt.

17. Schwarm (1000) von Robotern (100), umfassend zumindest zwei Roboter (100) nach einem der vorhergehenden Ansprüche, wobei die Roboter (100) dazu eingerichtet sind, im Zusammenwirken als Schwarm (1000) eine Reparatur einer Leitung (1), insbesondere einer Mittel- oder Hochspannungsleitung, durchzuführen.
